# EUROPÄISCHE PATENTSCHRIFT

(11) **EP 0 694 806 B1**
(45) Veröffentlichungstag und Bekanntmachung des Hinweises auf die Patenterteilung: **05.01.2000**
(21) Anmeldenummer: 94111758.2
(22) Anmeldetag: 28.07.1994
(51) Int. Cl.: G03B 27/00, G03B 27/32, B65H 39/11, G03D 13/00

(54) **Vorrichtung für den Transport von Photopapier in einem photographischen Kopiergerät**
Transport device for photographic paper in a photographic copier
Dispositif de transport de papier photographique dans une tireuse photographique

(43) Veröffentlichungstag der Anmeldung: 31.01.1996
(73) Patentinhaber: DURST PHOTOTECHNIK A.G., 39042 Brixen (IT)
(72) Erfinder: Hofer, Albert, I-39037 Mühlbach (IT)

(56) Entgegenhaltungen:
- EP-A- 0 367 879
- DE-A- 3 205 739
- US-A- 3 690 474
- XEROX DISCLOSURE JOURNAL, Bd.10, Nr.3, 1. Mai 1985, STAMFORD, CONN US Seiten 119 - 120 J.EMMELOT 'TWIN BELT FEED THROAT FOR SORTER'
- PATENT ABSTRACTS OF JAPAN vol. 7, no. 199 (M-240) (1344) 3. September 1983 & JP-A-58 100 062 (CANON K.K.) 14. Juni 1983

## Beschreibung

Vorliegende Erfindung betrifft eine Vorrichtung für den Transport von Photopapier in einem photographischen Kopiergerät.

Derzeit besteht eine Tendenz weg vom großen, zentralen Photolabor hin zu kleinen, dezentralisierten Labors, in denen Geräte Einsatz finden, die Belichtungseinheit mit der Papierentwicklungseinheit integrieren und ein in sich geschlossenes, kompaktes Photolabor bilden; allgemein werden solche Geräte als "Minilab" bezeichnet.

In den bekannten automatischen Printern bzw. photographischen Kopiergeräten wird das Photopapier auf das die Bilder belichtet werden, normalerweise in einer eigenen Papierkassette aufbewahrt. Das Papier wird aus dieser Kassette mittels einer eigenen Vorrichtung herausgezogen und entsprechend dem gewünschten Format in Belichtungsposition gebracht. Das belichtete Papier wird entweder als Rolle in die Papierentwicklungsmaschine transportiert oder alternativ, als Einzelblatt in der Papierentwicklungsmaschine entwickelt, nachdem jedes Bild nach jeder Belichtung von der Rolle abgeschnitten wird.

Das Minilab, auf das sich die vorliegende Erfindung bezieht, ist von der zweiten Art, d.h. in ihm wird jedes belichtete Bild noch innerhalb der Belichtungseinheit zu Einzelbildern zugeschnitten.

Eine Belichtungs-Entwicklungseinheit dieser Art ist z. B. aus DE-A 32-05-739 bekannt, bei der an eine Belichtungseinheit eine Papierentwicklungseinheit angeflanscht ist, mit dem Transport von Einzelblättern von der Belichtungseinheit zur Entwicklungseinheit. Die Belichtungseinheit beinhaltet eine Papier-Transporteinheit, die das Papier aus der Papierkassette zu einem Belichtungsfenster resp. -öffnung transportiert und eine Schneidevorrichtung, um die Einzelbilder entsprechend dem gewünschten Format zuzuschneiden. Eine Übergabeeinheit, die in Richtung Papiervorschub um seine Achse schwenkbar ist, nimmt die einzelnen Bilder in Vorschubrichtung auf, um sie durch Kippen in die Aufnahmeöffnung der Papierentwicklungsmaschine einzuführen.

Die Position des Papiers in der Belichtungsstation ist in einer fixen, unveränderten Position gegenüber der Eingabeöffnung der Entwicklungsmaschine, und die Übergabeeinheit übernimmt die Funktion und Überwindung von Niveauunterschieden zwischen den festen Start- und Ankunftspositionen der einzelnen Bilder.

Es sind auch Belichtungsautomaten bekannt, bei denen, um eine größere Zahl von Formaten und Vergrößerungsmöglichkeiten abzudecken, die Papierebene in Richtung der Projektionsachse des zu reproduzierenden Bildes veränderbar ist.

Ziel der vorliegenden Erfindung ist es eine Papiertransportvorrichtung in einem Belichtungsautomaten bzw. photographischen Kopiergerät zu schaffen, die geeignet ist, Einzelblätter zu transportieren.

Ziel dieser Erfindung war es, diese Lösung einfach, ökonomisch und leicht realisierbar zu verwirklichen.

Dieses Ziel wird im wesentlichen erreicht durch eine Transportvorrichtung für photographisches Papier, wie gekennzeichnet im Anspruch 1. Weitere Charakteristiken und Vorteile des Systems nach dieser Erfindung gehen aus der Beschreibung einer möglichen hier angeführten Ausführung hervor, die beispielhaft und nicht als ausschließlich so zu realisieren angegeben wird und die in den beigefügten Zeichnungen illustriert ist, wobei
- Zeichnung 1 eine schematische Darstellung eines photographischen Belichtungsautomaten ist, der eine solche Vorrichtung gemäß der Erfindung beinhaltet;
- Zeichnung 2 den Belichtungsautomaten lt. Zeichnung 1 zeigt, aber die Belichtungseinheit in einer anderen Arbeitsposition zeigt als in Zeichnung 1;
- Zeichnung 3 ist eine Seitenansicht einer Fördereinrichtung für Einzelblätter, die Teil der Papiertransportvorrichtung gemäß der Erfindung ist;
- Zeichnung 4 ist eine Frontansicht der Fördereinrichtung für Einzelblätter lt. Zeichnung 3
- Zeichnung 5 ist ein Schnitt der Fördereinrichtung für Einzelblätter lt. Zeichnung 3
- Zeichnung 6 ist eine Ansicht der Fördereinrichtung für Einzelblätter wie Zeichnung 5, aber in einer hinsichtlich der beweglichen Teile anderer Ausführung.

Die Transportvorrichtung, die Gegenstand der Erfindung ist, ist in einem allgemein bekannten Belichtungsautomaten bzw. photographischen Kopiergerät eingebaut. In Zeichnung 1 und 2 ist der Belichtungsautomat nur in seinen Hauptbestandteilen dargestellt, um die Erfindung zu erläutern. Sie beinhaltet eine Belichtungs-Lichtquelle 1, eine Negativbühne 2, um den Film/Filmstreifen im Strahlengang der Lichtquelle zu positionieren, einen optischen Bauteil 3 sowie eine Belichtungsstation, der optischen Gruppe gegenüberliegend, gekennzeichnet als 4.

Die Belichtungsstation 4 ist in einem lichtdichten Kasten montiert und umfaßt eine Papierkassette 5, die eine Rolle Photopapier enthält, eine Belichtungsöffnung 8, über die die Optik 3 wirkt, sowie eine Schneidevorrichtung 9, die die Papierrolle 7 in einzelne, belichtete Blätter 7a schneidet. Die Belichtungsstation 4 umfaßt auch Transporteinrichtungen, welche das Photopapier aus der Papierkassette ziehen, es zur Belichtungsöffnung transportieren und, nach dem Schnitt der Papierrolle in einzelne belichtete Blätter, diese Einzelblätter in eine an die Belichtungseinheit angeschlossene Entwicklungsmaschine 10 transportieren, diese Entwicklungsmaschine ist in der Zeichnung nur schematisch mit der Eingabeöffnung dargestellt.

Im Detail umfassen die Transporteinrichtungen einen Satz Auszugsrollen 11, eine erste Bandtransporteinheit 12 kombiniert mit einer Ansaugvorrichtung 13 für die Positionierung der Papierrolle vor der Belichtungsöffnung und eine zweite Bandtransporteinheit 14, als Fortsetzung der ersten, die die Einzelbilder zu einer Fördereinheit 15 transportiert, die zwischen Belichtungseinheit und Papierentwicklungseinheit angebracht ist und nachstehend im Detail beschrieben wird.

Die gesamte Belichtungseinheit 4 ist auf einem tragenden Rahmengestell 16 aufgebaut, die auf zwei Säulen 17 und 18 ruht und längs dieser über Kugellager (nicht in der Zeichnung sichtbar) in Richtung Projektionsachse 19 verstellbar ist, wie durch Pfeil A angedeutet. Die Verstellbewegung erfolgt über einen elektrischen Motor 20 und einem Kettenzug 21, der längs der beiden Säulen 17 und 18 läuft und mit dem Rahmensystem 16 verbunden ist.

Neben der Bewegung in Richtung der Projektionsachse ist die Belichtungseinheit auf Schienen auch seitlich in Richtung des Papiervorschubs verstellbar, wie durch Pfeil B dargestellt. Dadurch ist die Belichtungsöffnung zur optischen Achse für verschiedene Formate zentrierbar; die Formate sind durch die Länge des Papierbandes, das ausgezogen und abgeschnitten wird, bestimmt.

In Zeichnung 1 und 2 ist die Belichtungseinheit in unterschiedlichen Arbeitspositionen dargestellt entsprechend unterschiedlichen Vergrößerungsfaktoren bzw. den unterschiedlichen Formaten, die man herstellen will. Man beachte besonders wie der Lauf der zweiten Bandtransporteinheit 14 in Funktion der horizontalen Position der Belichtungseinheit variabel ist und wie eine Bandspann-Rolle im Zusammenwirken mit einer Rückholfeder die Bandlänge längs des Transportweges verkürzt. Ein beweglicher Teil der Fördereinheit für Einzelblätter 15, die am Rahmengestell 16 montiert ist, folgt der Belichtungseinheit in ihrer Bewegung in Richtung optische Achse wie im Hinweis 24 dargestellt und später näher beschrieben.

In der Zeichnung 3 und 4 ist die Fördereinheit für Einzelblätter 15 im Detail dargestellt; sie hat die Aufgabe, die Einzelblätter von der Belichtungseinheit zu der an diese angeflanschten Entwicklungsmaschine zu transportieren. Die Fördereinheit besteht aus zwei flachen, rechtwinkligen Rahmen 25 und 26 - im wesentlichen gleicher Bauart, die ein System umlaufender Bänder umschließen; beide Kopf an Kopf zusammengebaut ergeben eine Transportbahn für die Einzelblätter.

Jeder Rahmen besteht aus zwei seitlichen Trägern-27, 28 (29, 30), die durch zwei Distanzbolzen 31, 32 (33, 34) zusammengehalten werden. Die Träger eines jeden Rahmens bilden die Aufnahme für eine ganze Reihe von losen, drehbaren, kugelgelagerten parallelen Rollen 35 (36).

An einem Ende eines jeden Rahmens sind zwei Rollenpaare 35a/35b (36a/36b) montiert, am gegenüberliegenden Ende enden die Rahmen in L-Form; die letzte Rolle 35c (36c) ist dabei gegenüber dem anderen Rollen des Rahmens versetzt angeordnet.

Die beiden rechtwinkeligen Rahmen 25, 26 sind miteinander nicht fest, sondern so beweglich montiert, daß sich der eine Rahmen mehr oder weniger über den anderen Rahmen schieben kann, und in ihrem Abstand zueinander derart montiert, daß die Achse der letzten Rolle des einen Rahmens 35 c (36 c) auf die Höhe der Achsen der Rollen des anderen Rahmens zu liegen kommt.

Zu diesem Zweck ist an den Enden eines jeden seitlichen Rahmenteils 27, 28 (29, 30) mittels Schrauben eine Platte montiert. An dieser sind, über Distanzhalter in Position gehalten, zwei fix an den Platten montierte Naben mit lose sich drehenden Riemenscheiben 39, 40, 39' 40' (41, 42, 41', 42') befestigt und zwar derart, daß sie jeweils gegenüberliegend an den anliegenden Rahmen anstoßen.

Es ist damit klar, wie jeder Rahmen zwischen den Riemenscheiben-Paaren des gegenüberliegenden Rahmens läuft und wie die Rahmen gegeneinander verschiebbar sind und so die Papierfördereinrichtung 15 verschiedene Positionierungen einnehmen kann, je nach der jeweiligen Position des Rahmengestells.

Die Rollen des Rahmens 25, 26 bilden die Lagerung für eine Reihe von Riemenbändern 43, die so angeordnet und verteilt sind, daß sie eine Transportbahn zwischen den versetzt montierten Bändern der beiden aneinander montierten Rahmen bilden. Im besonderen, wie aus Zeichnung 5 ersichtlich, umfassen die Riemenbänder des Rahmens 25 die gesamten Rollen 35 und 35 c des eigenen Rahmens wie auch die Rollen 35 a des Gegenrahmens 26. Entsprechend erfassen die Riemenbänder des Rahmens 26 die Rollen 36 und 36 c des eigenen Rahmens wie auch die Rolle 35 des Gegenrahmens 25.

Die Rollen 35 b und 36 b der Rahmen 25 respektive 26 fungieren dabei als Ausgaberollen außerhalb des geschlossenen Riementransportsystems.

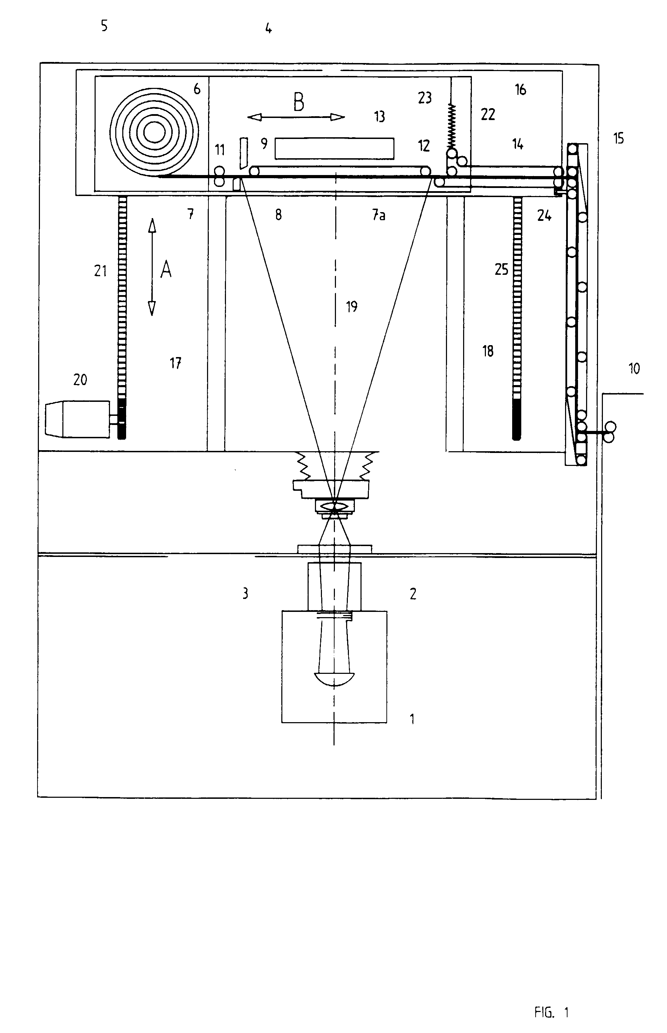

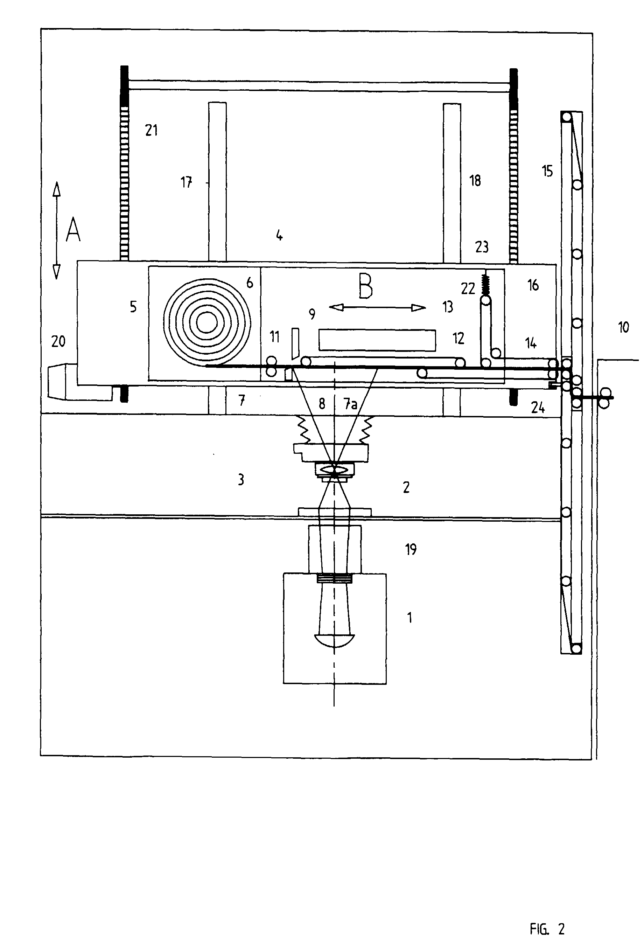

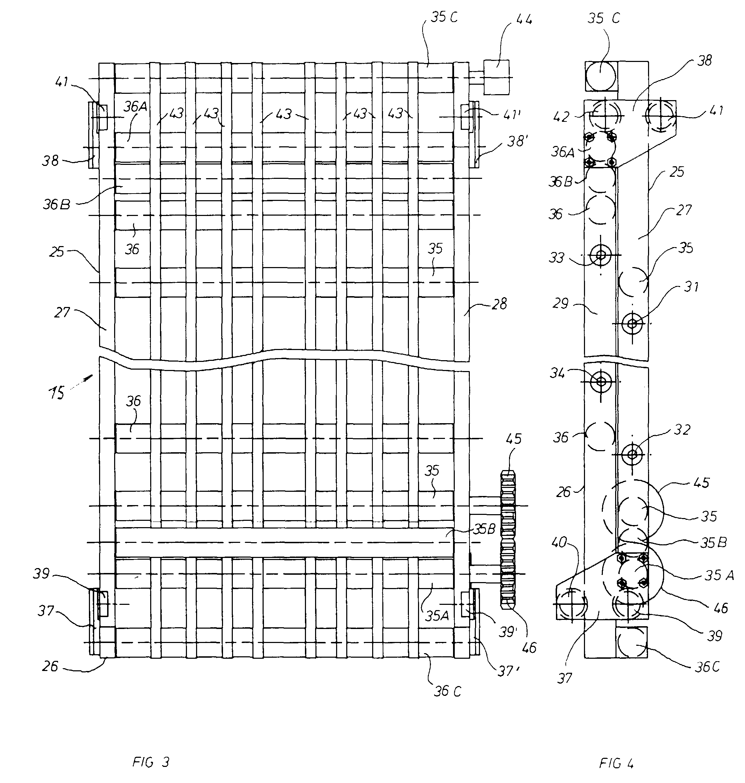

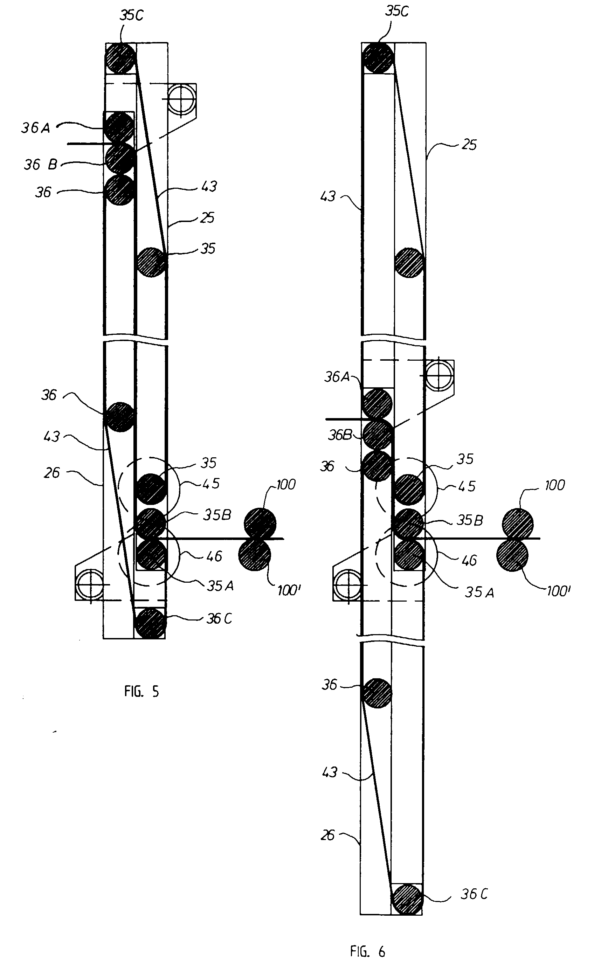

Aufgrund des besonderen Verlaufs der Riemenbänder eines jeden Rahmens, der auch einen Teil der Rollen des gegenüberliegenden Rahmens miterfaßt, bleibt die effektive Länge des Transportbandes der Riemenbänder gleich auch bei gegenseitiger Verschiebung der Rahmen untereinander. Einmal machen die Transportbänder des einen Rahmens einen längeren Transportweg und die des anderen Rahmens eine kürzeren oder umgekehrt. Der Antrieb der Riemenbänder erfolgt dadurch, daß die äußerste Rolle 35 c des Rahmens 25 an einem Motor 44 (siehe bei Fig. 3) angekoppelt ist, der alle Transportbänder über diese Rolle antreibt.

Diese Riemenbänder ihrerseits treiben die Rolle 35 an, die ihrerseits mittels eines Zahnradsystems 45, 46 an die Rolle 35a angekoppelt ist; an diese Rolle 35 a ist das gesamte Riemenbandsystem des Rahmens 26 angekoppelt.

Das bedeutet, daß mittels der Rolle 35 a, die die letzte Rollenstation des Rahmens 25 darstellt, die Bewegung auf das Riemenbandsystem des Rahmens 26 übertragen wird, da dieses ihrerseits ja die Rolle 35 a einschließt.

Die Riemenbänder formen damit ein Fördersystem für Einzelblätter, die zwischen Riemenbändern gehalten und durch die Umlaufbewegung der Riemen weitertransportiert werden. Anstelle der Riemenbänder könnte auch ein über die gesamte Breite der Rollen des Rahmens laufendes Förderband verwendet werden.

Die Rollenpaare 35 a, 35 b des Rahmens 25 bzw. die analogen Paare 36 a, 36 b des Rahmens 26 b fungieren jeweils als Einzugsrolle in die Transportbahn resp. Ausgaberolle aus der Transportbahn für das zu transportierende Einzelblatt und bestimmen die Eingaberesp. Ausgabeposition in bezug auf die Fördereinrichtung. Die Verlaufsstrecke des Papiers in der Papierfördereinheit ist verschieden je nach der Position der beiden Rahmen aufgrund des jeweiligen Vergrößerungsfaktors.

Die Funktion ist leichter verständlich, wenn man Zeichnung 5 und Zeichnung 6 vergleicht, die die gleiche Funktion bei unterschiedlicher Position der beiden Rahmen 25 und 26 darstellen. Wenn der Rahmen 26 in der Belichtungseinheit wie in Zeichnung 1 und 2, in bezug 24 positioniert wird und in Richtung der Projektionsachse bewegt wird und der Rahmen 25 in gleichbleibender Position gehalten wird, folgen die Einzugsrollen des beweglichen Rahmens der jeweils gewählten Projektionsebene während die Ausgaberollen (25) in Höhe der Eingabeposition in die Entwicklungsmaschine fix bleiben. Mit anderen Worten - die Einzugsposition des Fördersystems folgt der Papierebene während die Ausgabeposition des Förderungssystems in ihrer Position unverändert bleibt.

Das so angeordnete Fördersystem 15 ist somit geeignet ein belichtetes Einzelblatt, das von der Belichtungsstation kommt zur Eingabeöffnung der angeflanschten Papierentwicklungsmaschine zu transportieren, unabhängig von der jeweiligen Höhe der Belichtungsposition aufgrund des gewählten Vergrößerungsfaktors.

## Patentansprüche

1. Transporteinrichtung für den Transport von photographischem Papier in einem Photobelichtungsautomaten, der eine Entwicklungsmaschine (10) und ein in bezug auf diese verfahrbares Belichtungsfenster aufweist, durch welches eine Papierebene definiert ist, bestehend aus
- einer Vorrichtung für den Transport einer Rollenbahn photographischen Papiers aus einer Papierkassette zu dem Belichtungsfenster,
- einer Fördereinrichtung für geschnittene Einzelblätter photographischen Papiers von einer Eingangsposition zu einer Ausgangsposition,
- wobei die Fördereinrichtung so ausgebildet ist, daß die Einzelblätter vom Belichtungsfenster zur Eingangsposition und von der Ausgangsposition zur Entwicklungsmaschine (10) geführt werden können,
dadurch gekennzeichnet, daß
- die Fördereinrichtung zwei Rahmensysteme (25, 26) und zwei Transportriemenbänder (43) umfaßt,
- daß die Transportriemenbänder (43) in den Rahmensystemen (25, 26) derart montiert sind, daß ein zu transportierendes Einzelblatt zwischen den beiden umlaufenden Transportriemenbändern (43) erfaßt und von der Eingansposition zur Ausgangsposition transportiert wird,
- daß das erste Rahmensystem (26) so ausgebildet ist, daß es mit dem Belichtungsfenster verbunden und gemeinsam mit diesem verschoben werden kann,
- daß das zweite Rahmensystem (25) so ausgebildet ist, daß es fest in bezug auf die Entwicklungsmaschine (10) angeordnet werden kann,
- daß die beiden Rahmensysteme (25, 26) so ausgebildet und zueinander montiert sind, daß die Verschiebung des ersten Rahmensystems (26) in einer Ebene parallel zum Verlauf der Transportriemenbänder (43) zwischen Eingangs- und Ausgangsposition erfolgt,
- daß das erste Rahmensystem (26) mit einer Einzugsvorrichtung (36A, 36B) versehen ist, welche zum Einzug eines Einzelblattes aus der Eingangsposition dient, und das zweite Rahmensystem (25) mit einer Ausgabevorrichtung (35A, 35B) versehen ist, welche zur Ausgabe eines Einzelblattes in die Ausgangsposition dient,
- daß die Einzugsvorrichtung (36A, 36B) und die Ausgabevorrichtung (35A, 35B) so auf den Rahmensystemen (25, 26) angeordnet sind, daß der Abstand zwischen Eingangsposition und Ausgangsposition durch die Verschiebung des ersten Rahmensystems (26) gemeinsam mit der Papierebene verändert wird, und die Richtungen von Eingabe und Ausgabe jeweils einen von Null verschiedenen Winkel mit der Verschieberichtung des ersten Rahmensystems (26) einschließen.

2. Transporteinrichtung gemäß Anspruch 1, gekennzeichnet dadurch, daß die Transportriemenbänder (43) durch Führungsrollen (35, 36) in jedem Rahmensystem gehalten werden und daß diese Transportriemenbänder sowohl Rollen des einen als auch des anderen Rahmensystems umschließen.

3. Transporteinrichtung gemäß Anspruch 2 gekennzeichnet dadurch, daß die Transportriemenbänder (43) mit Ausgaberollen (35 b, 36 b) eines jeden Rahmensystems (25, 26) verbunden sind und damit eine Eingangsbahn für das Einzelblatt an der Stelle der Eingangsposition am ersten Rahmensystem (26) und eine Ausgangsbahn am an der Stelle der Ausgangsposition zweiten Rahmensystem (25) bilden.

4. Transporteinrichtung gemäß Anspruch 3 gekennzeichnet dadurch, daß die Eingangsbahn und die Ausgangsbahn auf unterschiedlichen, aber parallelen Ebenen laufen, wobei der Niveauunterschied zwischen diesen Bahnen durch die gegenseitige Verschiebung der Rahmensysteme zueinander verursacht wird.

5. Transporteinrichtung gemäß Anspruch 4 gekennzeichnet dadurch, daß die Eingangsbahn und die Ausgangsbahn senkrecht zur Verstellrichtung der beiden Rahmensysteme (25, 26) angeordnet sind.

6. Transporteinrichtung gemäß Anspruch 2 gekennzeichnet dadurch, daß die Transportriemenbänder (43) durch die Halterollen (35 a, 35 c) bewegt werden, die ihrerseits wieder mit einem Motor (44) verbunden sind.

7. Transporteinrichtung gemäß einem der vorerwähnten Ansprüche gekennzeichnet dadurch, daß die Fördereinrichtung eine Vielzahl von nebeneinander umlaufenden Transportriemenbändern enthält.

## Claims

1. Transport device for the transport of photographic paper in an automatic photographic exposure device that comprises a developing machine (10) and, movable in relation thereto, an exposure window which defines a paper plane, comprising
- an arrangement for the transport of a web from a roll of photographic paper, from a paper cassette to the exposure window,
- a device for conveying cut single sheets of photographic paper from an intake position to an output position,
- wherein the conveying device is constructed so that the single sheets can be guided from the exposure window to the input position and from the output position to the developing machine (10),
characterised in that
- the conveying device comprises two frame systems (25, 26) and two transport belts (43),
- the transport belts (43) are mounted in the frame systems (25, 26) so that a single sheet to be transported is gripped between the two circulating transport belts and is transported from the input position to the output position,
- the first frame system (26) is constructed so that it is connected to the exposure window and can be displaced together therewith,
- the second frame system (25) is constructed so that it can be arranged fixedly in relation to the developing machine (10),
- the two frame systems (25, 26) are so constructed and mounted in relation to one another that displacement of the first frame system (26) is effected in a plane parallel to the course of the transport belts (43) between input and output positions,
- the first frame system (26) is provided with an intake device (36A, 36B), which serves to draw a single sheet out of input position, and the second frame system (25) is provided with a delivery device (35A, 35B) which serves to deliver a single sheet to the output position,
- the intake device (36A, 36B) and the delivery device (35A, 35B) are so arranged on the frame systems (25, 26) that the distance between input position and output position is changed by displacement of the first frame system (26) jointly with the paper plane, and the directions of input and delivery in each case form an angle other than zero with the displacement direction of the first frame system (26).

2. Transport device according to claim 1, characterised in that the transport belts (43) are held by guide rollers (35, 36) in each frame system (25, 26) and in that these transport belts wrap round rollers not only of the one but also of the other frame system.

3. Transport device according to claim 2, characterised in that the transport belts (43) are connected to delivery rollers (35b, 35b) of each frame system (25, 26) and hence form an entry path for the single sheet at the location of the input position on the first frame system (26) and an output path at the location of the output position on the second frame system (25).

4. Transport device according to claim 3, characterised in that the input path and the output path run on different yet parallel planes, the difference in level between these two paths being created by the mutual displacement of the frame systems with respect to one another.

5. Transport device according to claim 4, characterised in that the inlet path and the output path are arranged perpendicular to the displacement direction for the two frame systems (25, 26).

6. Transport device according to claim 2, characterised in that the transport belts (43) are moved by the retaining rollers (35a, 35c) which in turn again are connected to a motor (44).

7. Transport device according to any one of the preceding claims, characterised in that the conveying device contains a plurality of transport belts circulating side by side.

## Revendications

1. Dispositif de transport de papier photographique dans un système automatique d'exposition photographique, qui comporte une tireuse (10) et une fenêtre d'exposition pouvant être déplacée par rapport à celle-ci et qui définit un plan de papier, lequel dispositif se compose :
- d'un dispositif pour le transport d'une bande enroulée de papier photographique d'une cassette de papier vers la fenêtre d'exposition,
- d'un dispositif de transport pour des feuilles découpées de papier photographique d'une position d'entrée à une position de sortie,
- le dispositif de transport étant conçu de telle sorte que les feuilles puissent être amenées de la fenêtre d'exposition à la position d'entrée et de la position de sortie à la tireuse (10),
caractérisé en ce que :
- le dispositif de transport comprend deux systèmes de cadres (25, 26) et deux courroies de transport (43) ;
- les courroies de transport (43) sont montées dans le système de cadre (25, 26) de telle sorte qu'une feuille à transporter soit transportée entre les deux courroies de transport (43) en circulation et transportée de la position d'entrée à la position de sortie ;
- le premier système de cadre (26) est conçu de manière à pouvoir être relié à la fenêtre d'exposition et déplacé en même temps que celle-ci ;
- le deuxième système de cadre (25) est conçu de façon à pouvoir être disposé de manière fixe par rapport à la tireuse (10) ;
- les deux systèmes de cadres (25, 26) sont conçus et montés l'un par rapport à l'autre de telle sorte que la translation du premier système de cadre (25) se fasse dans un plan parallèle au passage des courroies de transport (43) entre les positions d'entrée et de sortie ;
- le premier système de cadre (26) est pourvu d'un dispositif d'insertion (36A, 36B) qui sert à insérer une feuille à partir de la position d'entrée, et le deuxième système de cadre (25) est pourvu d'un dispositif de sortie (35A, 35B) servant à la sortie d'une feuille dans la position de sortie ;
- le dispositif d'insertion (36A, 36B) et le dispositif de sortie (35A, 35B) sont disposés sur les systèmes de cadres (25, 26) de telle sorte que la distance entre la position d'entrée et la position de sortie soit modifiée par le déplacement du premier système de cadre (26) en même temps que le plan du papier, et les sens d'entrée et de sortie forment chacun un angle différent de zéro avec le sens de translation du premier système de cadre (26).

2. Dispositif de transport selon la revendication 1, caractérisé en ce que les courroies de transport (43) sont maintenues par des galets de guidage (35, 36) dans chaque système de cadre et en ce que ces courroies de transport entourent des galets de l'un des systèmes de cadres aussi bien que de l'autre.

3. Dispositif de transport selon la revendication 2, caractérisé en ce que les courroies de transport (43) sont reliées à des galets de sortie (35b, 36b) de chaque système de cadre (25, 26) et forment ainsi une trajectoire d'entrée pour la feuille isolée à l'endroit de la position d'entrée au niveau du premier système de cadre (26) et un trajet de sortie à l'endroit de la position de sortie au niveau du deuxième système de cadre.

4. Dispositif de transport selon la revendication 3, caractérisé en ce que le trajet d'entrée et le trajet de sortie se situent à des niveaux différents mais parallèles, la différence de niveau entre ces trajets étant occasionnée par le décalage des systèmes de cadres l'un par rapport à l'autre.

5. Dispositif de transport selon la revendication 4, caractérisé en ce que le trajet d'entrée et le trajet de sortie sont disposés perpendiculairement au sens de déplacement des deux systèmes de cadres (25, 26).

6. Dispositif de transport selon la revendication 2, caractérisé en ce que les courroies de transport (43) sont déplacées par les galets de maintien (35a, 35c) qui sont quant à eux reliés à un moteur (44).

7. Dispositif de transport selon l'une ou l'ensemble des revendications précédentes, caractérisé en ce que le dispositif de transport comporte une pluralité de courroies de transport tournant les unes à côté des autres.
